Europäisches Patentamt

(19) European Patent Office

Office européen des brevets

(11) Numéro de publication: **0 062 549**
**B1**

(12) **FASCICULE DE BREVET EUROPEEN**

(45) Date de publication du fascicule du brevet:
13.11.85

(51) Int. Cl.⁴: **B 01 D 35/12**

(21) Numéro de dépôt: **82400381.8**

(22) Date de dépôt: **05.03.82**

---

(54) Appareil de filtration de fluides et procédé mis en oeuvre dans cet appareil.

---

(30) Priorité: **03.04.81 FR 8106722**

(43) Date de publication de la demande:
**13.10.82 Bulletin 82/41**

(45) Mention de la délivrance du brevet:
**13.11.85 Bulletin 85/46**

(84) Etats contractants désignés:
**AT BE CH DE GB IT LI LU NL SE**

(56) Documents cités:
**DE - A - 2 620 435**
**DE - B - 1 761 827**
**FR - A - 1 418 099**
**GB - A - 2 045 102**
**US - A - 3 193 100**
**US - A - 3 502 214**

(73) Titulaire: **SOCIETE D'EXPLOITATION DES ETABLISSEMENTS RELLUMIX Société dite:, 5 Rue Ambroise Thomas, F-75009 Paris (FR)**

(72) Inventeur: **Ecabert, Jacques, 25 Rue de Jaigny, F-95160 Montmorency (FR)**
Inventeur: **Alliet, Guy, 15 Allée du Cerf-Volant, F-95130 Franconville (FR)**

(74) Mandataire: **Polus, Camille et al, c/o Cabinet Lavoix 2, Place d'Estienne d'Orves, F-75441 Paris Cedex 09 (FR)**

---

## Description

La présente invention concerne d'une façon générale la filtration des fluides et elle est plus particulièrement relative à la filtration des huiles et des combustibles pour moteurs.

On sait qu'il est indispensable de filtrer en continu les huiles et les combustibles utilisés dans les moteurs et, notamment dans les moteurs diesels. On connaît déjà des installations de filtrage en continu à régénération que sont utilisées avec les moteurs diesels et dans lesquels l'huile (ou le combustible) prélevée dans le moteur est envoyée par une pompe dans un appareil contenant une enceinte cylindrique verticale divisée horizontalement par une cloison en deux compartiments superposés, des éléments filtrants tubulaires étant fixés verticalement dans l'un des compartiments par une extrémité pardessus des trous correspondants prévus dans la cloison de séparation, leur autre extrémité étant fermée.

Dans l'autre compartiment est monté un arbre vertical rotatif comportant un bras latéral qui tourne de façon continue et dont l'extrémité vient en coïncidence tour à tour et de façon étanche avec le trou de la cloison, sur la face inférieure de celle-ci, qui correspond à chaque élément filtrant. L'huile usée provenant du moteur est envoyée par la pompe dans le compartiment contenant le bras rotatif, elle filtre à travers les parois de ces éléments filtrants, de l'intérieur vers l'extérieur, et est recueillie dans le compartiment opposé.

Pour régénérer les éléments filtrants, c'est-à-dire les débarrasser de leurs impuretés lorsque le bras coïncide avec le trou correspondant à un élément filtrant, on applique une pression à travers le bras, en sens inverse à la pression de filtrage normale pour déloger les impuretés retenues dans les parties filttrantes et les rejeter en sens inverse par l'intérieur des éléments filtrants et les évacuer par l'intermédiaire dudit bras rotatif, comme décrit dans le brevet allemand n° 1 761 827.

Ces appareils présentent un certain nombre d'inconvénients. Les éléments filtrants utilisés, qui comprennent habituellement un tube métallique perforé servant de support à plusieurs gaines et à une toile filtrante ne peuvent être entièrement décolmatés par la simple application d'une contre-pression à travers le bras rotatif et doivent être ensuite démontés pour être entièrement décolmatés ou nettoyés de nombreuses impuretés restant retenues dans la gaine interne de sorte que lorsqu'on applique de nouveau la pression de filtration, ces impuretés se trouvent de nouveau appliquées sur la toile filtrante et de ce fait la capacité de filtrage de celle-ci se trouve très nettement diminuée.

L'invention a pour but de remédier à ces inconvénients en fournissant un procédé pour filtrer des fluides et un filtre à fluides à régénération automatique au moyen desquels les éléments filtrants sont entièrement débarrassés des impuretés qu'ils ont retenues, ce que augmente leur durée d'utilisation et fournit par conséquent un appareil ayant un fonctionnement très fiable sur une très longue durée.

L'invention a également pour but de fournir un tel filtre fonctionnant sous une pression minimale de service réduite.

L'invention a pour objet, à cet effet, un appareil de filtration de fluides en continu, comprenant une enceinte divisée intérieurement en deux compartiments par une cloison comportant au moins une rangée circulaire de trous, des éléments filtrants de forme tubulaire creuse, fermés à une extrémité et fixés par leur extrémité opposée ouverte sur chacun des trous de la cloison, dans le compartiment de sortie du fluide filtré, un bras tubulaire rotatif monté dans le compartiment d'entrée du fluide à filtrer et dont l'extrémité balaye le cercle de trous pour venir coïncider tour à tour avec chacun d'eux, appareil caractérisé en ce qu'il comprend un dispositif pour appliquer un choc hydraulique brutal à contre-courant à travers la paroi de chaque élément filtrant tour à tour, ce dispositif comprenant un patin (21) à l'extrémité rotative du bras (20) pour fermer un trou (16) de la cloison (15), alors que l'ouverture (51) de ladite extrémité du bras est fermée par la cloison, et une pompe aspirante (P).

L'invention a également pour objet un procédé de filtration et décolmatage mis en oeuvre dans un appareil de filtration de fluides en continu du type indiqué ci-dessus, dans lequel on admet sous pression le fluide à filtrer dans le compartiment contenant le bras rotatif et en correspondance de chaque position dudit bras:

a) on isole un élément filtrant du compartiment d'entrée du fluide en le faisant coincider avec l'extrémité du bras rotatif;

b) on fait passer le fluide à travers les éléments restants de l'intérieur vers l'extérieur;

c) on recueille le fluide filtré dans le compartiment qui ne contient pas le bras rotatif;

d) on provoque — à travers le bras rotatif — une perte de charge à travers la paroi de l'élément filtrant isolé du compartiment d'entrée du fluide; et

e) on recueille à travers ce bras, le courant résultant de fluide chargé des impuretés arrêtées par ledit élément filtrant:

ledit procédé étant caractérisé en ce que, dans une première phase, on ferme à la fois un élément filtrant et l'ouverture de l'extrémité rotative du bras et on applique simultanément une dépression à l'intérieur dudit bras, et, dans une seconde phase, on provoque un choc hydraulique brusque à contre-courant à travers la paroi de l'élément filtrant en le mettant en communication avec l'ouverture de ladite extrémité du bras et on évacue sous pression le courant du fluide chargé d'impuretés.

D'autres caractéristiques et avantages de l'invention apparaîtront au cours de la description qui va suivre, faite en se référant aux dessins annexés donnés uniquement à titre d'exemple et dans lesquels:

— la figure 1 est une vue schématique en section d'une installation de filtration de fluide suivant l'invention;
— la figure 2 est une vue partielle en perspective montrant les moyens de fermeture prévus à l'extrémité du bras rotatif;
— la figure 3 est une vue en coupe avec arrachement partiel d'un élément filtrant de l'appareil représenté à la figure 2;
— la figure 4 est une vue partielle en coupe à plus grande échelle d'une partie de la paroi de l'élément filtrant représenté à la figure 3;
— la figure 5 est une vue en coupe d'un clapet de pied d'élément filtrant;
— la figure 6 est une vue en coupe du dispositif indicateur de régénération de l'appareil suivant l'invention;
— la figure 7 en est une vue en coupe suivant la ligne1-1 de la figure 6.

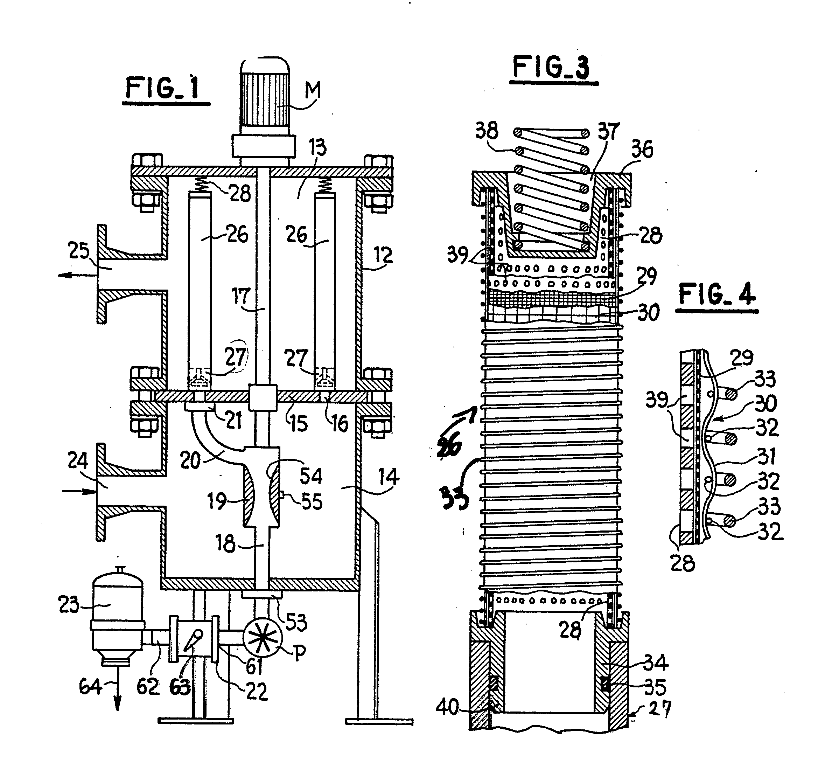

On a représenté de façon schématique à la figure 1 une installation de filtration de fluide suivant l'invention, qui comprend une enceinte, ayant une ouverture d'entrée 24 et une ouverture de sortie 25 qui est habituellement de forme cylindrique, disposée verticalement, qui est divisée en deux chambres superposées ou compartiments 13, 14, au moyen d'une cloison intermédiaire 15 qui est percée de trous 16 disposés en au moins un cercle. Dans le compartiment supérieur 13 sont disposés des éléments filtrants tubulaires 26 fermés à leur extrémité supérieure et dont l'extrémité opposée ouverte est fixée sur la cloison 15 en face de chacun des trous 16.

Un dispositif moteur M adapté pour entraîner en rotation un bras tubulaire 18, 20 en forme de manivelle dont l'extrémité 20 est adaptée pour venir en coïncidence tour à tour avec chacun des trous 16 au moyen d'un patin 21.

Chaque élément filtrant 26 est constitué d'un support métallique tubulaire perforé sur lequel sont disposés des moyens filtrants tels que des tissus filtrants de différents types, habituellement une première gaine, une toile filtrante et une seconde gaine.

Le fluide pollué à épurer est admis sous pression dans le compartiment d'entrée 14 par une ouverture d'entrée 24 et la pression s'exerce sur les parois des éléments filtrants 26, de l'intérieur vers l'extérieur de ceux-ci et le fluide filtré épuré est recueilli dans le compartient de sortie 13 d'où il est renvoyé par l'intermédaire d'une ouverture de sortie 25.

L'appareil décrit jusqu'ici est connu, notamment par le brevet allemand n° 1 761 827 et fonctionne de la façon suivante.

Lors de sa rotation, l'extrémité 20 du bras 18 vient coïncider tour à tour avec un trou 16 correspondant à l'intérieur d'un élément filtrant 26.

Lorsque cet élément est ainsi relié à l'atmosphère par l'intermédiaire du bras tubulaire 18, la pression du fluide dans le compartiment de sortie 13, supérieure à la pression atmosphérique, déloge les impuretés accumulées dans l'élément filtrant.

Malheureusement, dans les installations de ce type, cette chute de pression ne permet pas de déloger la totalité des impuretés accumulées sur les éléments filtrants et on a constaté qu'une bonne partie des ces impuretés restait retenue dans la gaine de filtrage en tissu, notamment dans la gaine intérieure et se trouvait ensuite de nouveau appliquée sur la paroi de l'élément filtrant lorsqu'on rétablissait la pression sur celui-ci, c'est-à-dire lorsque l'extrémité du bras rotatif 20 avait quitté cet élément pour venir coïncider avec l'élément suivant.

Suivant l'invention, le bras rotatif 20 est relié à un dispositif permettant d'appliquer un choc hydraulique brusque à contre-courant à travers chaque élément filtrant, de l'extérieur vers l'intérieur.

Ce dispositif comprend d'une part des moyens pour fermer et ouvrir les trous 16 de la cloison 15 et d'autre part des moyens pour appliquer une dépression sur l'élément filtrant 26 fixé sur le trou 16 lors de l'ouverture de celui-ci.

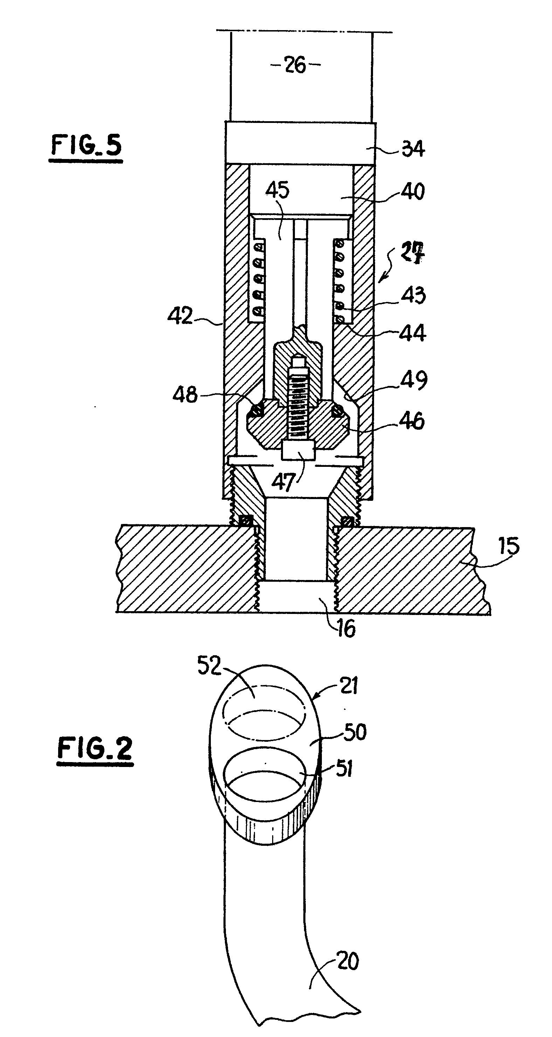

Les moyens pour fermer et ensuite ouvrir les trous 16 sont constitués par le patin 21 fixé à l'extrémité du bras 20 et adapté pour glisser sur la surface inférieure de la cloison 15 qui présente, suivant le cercle décrit par le bras, une longueur sensiblement supérieure à la somme des diamètres d'un trou 16 et du bras 20, de telle sorte qu'une partie 52 du patin 21 vienne tout d'abord recouvrir et obturer totalement un trou 16, cependant que l'ouverture 51 du bras se trouve elle-même à ce moment complètement obturée (figure 2).

Les moyens pour appliquer une dépression sur l'élément filtrant fixé sur le trou 16 comprennent une pompe P montée dans le circuit de sortie du bras 20.

L'extrémité du bras 20 opposée à l'organe de fermeture 21 est reliée à la partie supérieure du carter d'un dispositif régulateur de débit 19 qui sera décrit plus loin de façon détaillée et qui est monté sur une section 18 d'arbre creux rotatif accouplé à un arbre central 17 traversant l'appareil et entraîné en rotation par un moteur M monté par exemple à la partie supérieure de l'appareil.

L'extrémité inférieure de la section d'arbre creux 18 qui communique avec l'extrémité inférieure du régulatuer de débit 19 est reliée à l'entrée d'une pompe P dont le refoulement est relié à un dispositif 22 indicateur de régénération dont la sortie est ellemême reliée à un épurateur centrifuge 23 comme on le décrira dans la suite.

Le régulateur 19 comporte un corps ou carter qui peut être cylindrique et qui communique par son extrémité opposée au bras 20 avec l'espace intérieur de la section d'arbre 18 qui s'étend vers l'extérieur de l'appareil à travers le fond du compartiment 14 par l'intermédiaire d'un joint étanche rotatif 53 et le régulateur comprend intérieurement un manchon 54 constitué d'une membrane élastique fixée de façon étanche par la périphérie de ses extrémités opposées à la paroi interne du carter. Un orifice 55 muni d'une valve communique avec l'espace délimité entre la paroi du carter du régulateur et le manchon 54. Le fonctionnement de ce régulateur sera expliqué de façon plus détaillée dans la suite.

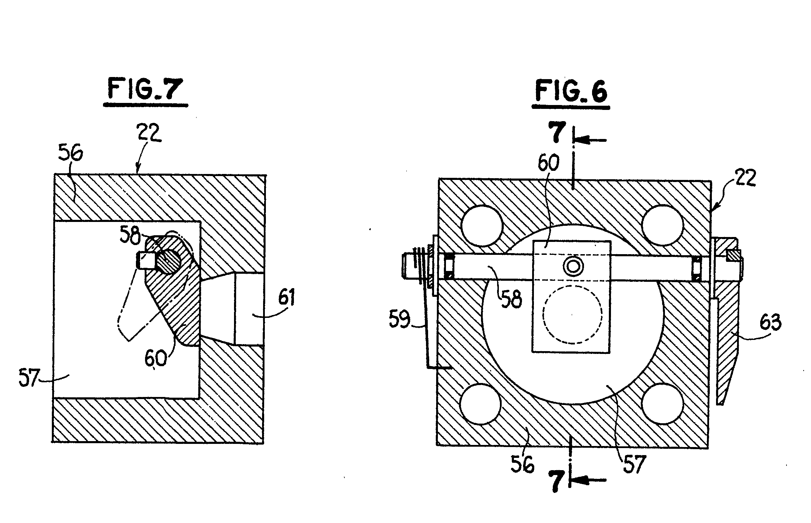

L'extrémité de la section d'arbre 18 à l'extérieur de l'appareil est reliée au dispositif 22 indicateur de régénération qui est représenté aux figures 6 et 7. Ce dispositif indicateur de régénération 22 comprend un corps creux 56 ayant par exemple à peu près la forme d'un cube ouvert sur une face et délimitant une chambre intérieure 57 traversée par un axe 58 sollicité par un ressort 59 et portant un obturateur 60 de façon que celui-ci soit appliqué sur un orifice 61 prévu dans la face du corps opposée à sa face ouverte. L'axe 58 dépasse à l'extérieur du corps 22 et un index 63 est calé sur son extrémité.

Le corps du dispositif indicateur de régénération 22 est adapté pour être fixé avec son orifice 61 relié à l'extrémité de sortie de la section d'arbre 18 à l'extérieur de l'appareil, sa face ouverte étant fermée au moyen d'une plaque comportant un orifice (non représenté) et adaptée pour être reliée par un conduit 62 à l'entrée de l'épurateur centrifuge 23.

On a représenté à la figure 3 un élément filtrant 26 suivant l'invention qui comprend un support tubulaire 28 en métal perforé représenté partiellement à plus grande échelle à la figure 4, sur la surface externe duquel est appliquée une toile filtrante 29 par exemple en polyamide recouverte elle-même d'une gaine externe 30 par exemple en polyester comportant des fils de chaîne 31 et des fils de trame 32.

L'ensemble est entouré d'un fil métallique 33 enroulé hélicoïdalement avec un léger jeu radial (qui est exagéré à la figure 4 dans un but de clarté).

Une extrémité du support tubulaire 28 recouverte de la toile filtrante 29, de la gaine externe 30 et de l'enroulement externe (fil) 33, est reçue dans une gorge périphérique d'une douille 34 comportant un joint d'étanchéité 35, et l'extrémité supérieure du support tubulaire 28, également entourée de la toile filtrante 29, de la gaine externe 30 et du fil hélicoïdal 33, est reçue de façon étanche dans une gorge périphérique d'un chapeau 36 présentant une cuvette centrale 37 dans laquelle est disposé un ressort hélicoïdal de compression 38 extérieur.

On remarquera à cet égard que les éléments filtrants de la technique antérieure dans lesquels le filtrage s'effectue de l'extérieur vers l'intérieur comprennent habituellement sur le support tubulaire métallique perforé une gaine interne analogue à la gaine 30, disposée entre le support et le manchon en toile filtrante et on remarquera que l'élément filtrant suivant l'invention ne comporte pas de gaine interne, ce qui constitue une économie par rapport à la technique antérieure.

Cependant, pour mieux soutenir la toile filtrante 29 que la pression de filtration applique sur le support 28, ce dernier présente un réseau de trous 39 plus dense que celui des supports classiques et qui ont un diamètre et un pas tels que le support 28 puisse soutenir la toile filtrante 29 de façon efficace. Dans ce but, les trous ont un diamètre de 2 mm et un pas de 4 mm. La gaine 30 comporte un fil de trame 32 annulaire ayant un diamètre supérieur à celui du fil de chaîne 31, dans une proportion de 1 à 2. De préférence, le fil de trame a un diamètre de 4/10 mm, et le fil de chaîne un diamètre de 2/10 mm.

Le fil de métal 33 est enroulé hélicoïdalement avec ses spires relativement rapprochées, dans un but qui sera décrit dans la suite.

L'extrémité inférieure 40 de la douille 34 est reçue à ajustement étanche au moyen du joint 35 dans l'extrémité supérieure d'un moyen de retenue comme connu en soi et désigné dans son ensemble par la référence 27 et représenté en section à la figure 5.

Le moyen de retenue 27 comprend un corps creux 42 ayant à une extrémité un diamètre intérieur correspondant au diamètre extérieur de l'extrémité 40 de la douille 34.

Le corps 42 comporte un alésage dans lequel est disposé un ressort hélicoïdal de compression 43 qui prend appui par une extrémité sur un épaulement interne 44 de l'alésage et dont l'extrémité opposée prend appui sur une collerette d'un organe de guidage 45 de section cruciforme portant à son extrémité opposée un obturateur 46 maintenu par une vis 47 et adapté pour prendre appui de façon étanche par l'intermédiaire d'une garniture d'étanchéité 48 sur un siège annulaire 49 formé à l'intérieur du corps.

L'extrémité du corps 42 au-delà de l'oburateur 46 est adaptée pour être fixée de façon étanche sur un trou 16 de la cloison 15.

L'ensemble consitue une soupape agencée de manière que l'extrémité de l'organe de guidage 45 soit repoussée à l'encontre de l'action du ressort 43 lorsque l'extrémité 40 d'un élément filtrant 26 est introduite et fixée dans le corps 42, éloignant ainsi l'obturateur 46 de son siège 49 et ouvrant la communication entre l'espace intérieur de l'élément filtrant 26 et le trou 16 à travers la cloison 15.

La surface inférieure de la cloison 15 est polie de façon à coopérer à contact étanche avec la surface supérieure 50 également polie du patin 21 fixé à l'extrémité du bras rotatif 20, qui peut être constitué d'une plaque 50, comportant une ouverture 51 et ayant suivant le cercle décrit une longueur telle que la partie 52 de la plaque 50 obture complètement un trou 16 tandis qu'en même temps l'ouverture 51 se trouve elle-même obturée par la cloison 15, à un instant donné du mouvement de rotation du bras 20.

Grâce à cet agencement, suivant le sens de rotation du bras, un trou 16 est toujours obturé avant de se trouver brusquement en coïncidence avec l'ouverture 51.

Le fonctionnement de l'appareil de filtration suivant l'invention est le suivant.

Un fluide, par exemple de l'huile polluée provenant d'un moteur diesel, est amené sous pression par l'intermédiaire d'une pompe (non représentée) à l'ouverture d'entrée 24 et dans le compartiment 14. Le bras rotatif 20 étant en contact par l'intermédiaire de son organe de fermeture 21 avec la face inférieure de la cloison 15 au droit d'un trou 16 communiquant avec un élément filtrant 26, l'intérieur des autres éléments filtrants 26 communique librement avec le compartiment 14 et l'huile sous pression pénètre à l'intérieur des éléments filtrants à travers les trous 16.

L'huile polluée traverse les orifices 39 du support 28 puis est filtrée par la toile filtrante 29 et la gaine externe 30. L'huile sortant à travers les parois des éléments filtrants 26 remplit le compartiment 13 d'où elle est renvoyée au moteur par l'intermédiaire de l'ouverture de sortie 25.

Les arbres 17, 18 et avec ce dernier le régulateur de débit 19 et le bras rotatif 20 avec son patin 21 sont entraînés en rotation par le moteur M, de façon que l'ouverture centrale 51 du patin 21 vienne coïncider tour à tour avec chacun des trous 16 successivement, de façon connue.

La pompe P étant en fonctionnement de façon continue applique une dépression dans le régulateur de débit 19 et dans le bras 20, dépression qui est maintenue tant que l'ouverture 51 est obturée par le contact de l'organe de fermeture 21 avec la cloison 15, entre des trous 16.

Avant que l'ouverture 51 ne vienne coïncider avec un trou 16, celui-ci est tout d'abord obturé par la partie 52 de la plaque 50 adjacente à l'ouverture 51.

A ce moment, l'élément filtrant 26 correspondant se trouve isolé du compartiment 14 dans lequel pénètre l'huile polluée sous pression et la chute de pression à travers sa paroi se trouve momentanément annulée. Aucune pression ne s'exerçant alors de l'intérieur vers l'extérieur, les impuretés ne sont plus appliquées sur la paroi interne de l'élément filtrant.

Le bras 20 poursuivant sa rotation, l'ouverture 51 vient alors coïncider avec le trou 16. L'espace intérieur de l'élément filtrant 26 est alors soumis brusquement à la dépression régnant dans le bras 20, et à l'aspiration de la pompe P.

Le brusque choc hydraulique qui en résulte a pour effet de déloger les impuretés retenues à l'intérieur de l'élément filtrant 26 et de les chasser par le bras à travers le régulateur 19 et le dispositif indicateur de régénération 22 jusque dans l'épurateur centrifuge 23 avec un courant d'huile sous pression.

Le bras 20 poursuivant sa rotation ferme ensuite le trou 16 correspondant à l'élément filtrant 26 suivant qu'il isole de la chambre 14, puis l'ouverture 51 vient coïncider avec ce trou pour soumettre à son tour cet élément au même choc hydraulique.

Les éléments filtrants 26 sont ainsi soumis tour à tour cycliquement à l'effet de choc hydraulique qui se produit à chaque fois que l'ouverture 51 coïncede avec un trou 16, de l'intérieur du compartiment 13 à travers l'élément filtrant, chassant les impuretés par l'intermédiaire du bras 20.

Le courant d'huile emportant les impuretés se trouve projeté avec des impulsions successives vers l'extérieur. Le volume d'huile chargé d'impuretés et refoulé par la pompe a pour effet de déplacer l'obturateur 60 du dispositif indicateur de régénération 22 en entraînant l'axe 58 et de ce fait l'index 63, qui effectue ainsi un mouvement oscillant indiquant le fonctionnement satisfaisant de l'appareil.

Cependant, l'épurateur centrifuge 23 doit de préférence recevoir un courant d'huile continu. Dans ce but, le régulateur de débit 19 est préalablement chargé au moyen d'air comprimé introduit par la valve 55 qui gonfle et déforme la membrane (manchon) 54 vers l'intérieur en étranglant ainsi la section de passage dans le carter du régulateur. Lorsqu'un courant d'huile chargé d'impuretés provenant de l'intérieur d'éléments filtrants 26 entre dans le régulateur, la pression a pour effet de repousser la membrane (manchon) 54 vers l'extérieur, ce qui est autorisé par la pression de l'air comprimé entre la membrane et la paroi du corps. La membrane cède élastiquement sous la pression de l'huile et le volume intérieur du régulateur augmente, ce qui a pour effet d'amortir l'onde de pression produite par le débit de l'huile provenant de l'élément filtrant. Lorsque le bras 20 continue de tourner, les débits d'huile successifs sous pression provenant de chaque élément filtrant 26 tour à tour sont ainsi régularisés par le régulateur 19.

En conséquence, lorsque l'appareil fonctionne de façon satisfaisante, l'index 23 du dispositif indicateur de régénération 22 au lieu d'effectuer un mouvement oscillant indiquant les ondes de pression successives produites par l'huile chassée des éléments filtrants prend une position moyenne à peu près stable qui indique un filtrage correct continu dans l'appareil et l'arrivée d'un courant d'huile à peu près continu à l'épurateur centrifuge 23 qui peut ainsi fonctionner de façon satisfaisante et l'huile épurée est recueillie à la sortie 64 de l'épurateur pour être renvoyée au moteur.

Le procédé et l'appareil suivant l'invention permettent d'obtenir un décolmatage à peu près instantané des éléments filtrants après avoir au préalable stabilisé la pression à l'intérieur et à l'extérieur des éléments filgrants en obturant la sortie de ceux-ci. On obtient ainsi un fonctionnement cyclique à trois phases: une phase de filtration et deux phases de décolmatage.

En effet, suivant l'exemple représenté, dans une phase initiale du fonctionnement, la totalité des éléments filtrants moins un (celui avec lequel est relié le bras rotatif 20) est utilisée pour filtrer l'huile et lorsque le bras commence à tourner, il obture tout d'abord la sortie de l'élément suivant (dans le sens de la rotation du bras rotatif) établissant ainsi un équilibre des pressions à l'intérieur et à l'extérieur de la paroi de cet élément et met ensuite ce dernier en communication instantanée avec l'aspiration de la pompe proviquant ainsi un choc hydraulique important et brutal qui a pour effet de décoller de la toile filtrante et de la gaine externe toutes les particules d'impuretés qui auraient pu s'y trouver emprisonnées. Ce décolmatage est facilité par l'établissement préalable d'un équilibre de pression pendant lequel les particules ne sont plus appliquées avec force contre les parois du filtre, ce qui facilite leur décollage.

L'appareil suivant l'invention présente également un avantage important en raison de la présence des clapets intercalés entre le plateau et les éléments filtrants, qui sont adaptés pour être ouverts automatiquement lorsqu'un élément filtrant est disposé en place, et pour se fermer lorsque l'élément filtrant est retiré. En conséquence, en cas de besoin, si un élément filtrant est par exemple détérioré, il est possible de le retirer pour le réparer et de remettre l'appareil instantanément en fonctionnement, le trou 16 correspondant se trouvant automatiquement obturé par le clapet. En service, lorsque l'organe de fermeture 21 arrive en coïncidence avec le trou correspondant à l'emplacement dépourvu d'élément filtrant, il se produit simplement une phase nulle du fonctionnement. La pression régnant dans le compartiment 14 étant supérieure à celle régnant dans le compartiment 13, l'obturateur 46 est alors automatiquement maintenu appliqué contre son siège en fermant ainsi le passage lorsque le trou est découvert, la force du ressort étant suffisante pour maintenir le clapet fermé lorsque le trou coïncide avec l'ouverture 51 et est relié à la pompe P.

Le sens du décolmatage de l'extérieur vers l'intérieur a pour résultat d'exercer sur la toile filtrante 29 (figure 4) des forces s'exerçant alternativement en sens inverse, en écartant la toile 29 du support 28 pendant le filtrage et en appliquant cette toile 29 sur ce support au moment du décolmatage.

La toile filtrante est soutenue efficacement par le réseau de trous du support 28, plus dense que dans les éléments filtrants d'un type analogue utilisé dans les appareils de la technique antérieure, lorsqu'elle est appliquée sur lui par la pression extérieure. Lorsqu'elle est écartée du support 28, elle est soutenue par la gaine extérieure 30. On a constaté que cette gaine externe réalisée comme indiqué plus haut était tout à fait suffisante pour assurer un maintien approprié de la toile filtrante jusqu'à des chutes de pression de 3 à 5 bars à des températures du fluide à filtrer s'élevant jusqu'à 50°.

Au-delà de cette température, la matière plastique des fils de trame et de chaîne de la gaine n'offre plus la résistance suffisante et le fil de métal 33 enroulé hélicoïdalement à spires relativement serrées autour de la gaine assure à celle-ci le soutien auffisant pour effectuer des opérations de filtrage à des températures pouvant s'élever jusqu'à 90° C et avec une chute de pression pouvant s'élever jusqu'à 10 bars. On peut si on le désire obtenir un fonctionnement satisfaisant à des températures et à des pressions encore supérieures en prévoyant un fil de métal 33 de diamètre approprié et dont le pas d'enroulement sera suffisamment serré.

On remarquera enfin que grâce au chapeau d'extrémité supérieure muni de son ressort 38 chaque élément filtrant peut être disposé et maintenu facilement en place dans l'appareil, ajusté sur l'extrémité supérieure du corps du clapet, le ressort 38 prenant alors appui sur le couvercle de l'appareil et maintenant l'élément filtrant en place.

Il ressort de ce que précède que l'appareil suivant l'invention apporte de nombreux perfectionnements et avantages par rapport aux appareils du même type de la technique antérieure avec des moyens de contrôle du fonctionnement et une récupération du fluide filtré pollué contenu dans les éléments filtrants.

On notera enfin que le vide créé entre la pompe et l'élément filtrant augmente la différence de pression que règne au droit de la matière filtrante de l'élément. Pour une dépression de 0,5 bar, il suffit de 1,5 bar de pression de sortie pour obtenir 2 bars de pression différentielle, valeur nécessaire à la bonne régénération des éléments filtrants.

## Revendications

1. Appareil de filtration de fluides en continu, comprenant une enceinte divisée intérieurement en deux compartiments (13, 14) par une cloison (15) comportant au moins une rangée circulaire de trous (16), des éléments filtrants (26), de forme tubulaire creuse, fermés à une extrémité et fixés par leur extrémité opposée ouverte sur chacun des trous de la cloison, dans le compartiment (13) de sortie du fluide filtré, un bras tubulaire rotatif (18, 20) monté dans le compartiment (14) d'entrée du fluide à filtrer et dont l'extrémité balaye le cercle de trous pour venir coïncider tour à tour avec chacun d'eux, appareil caractérisé en ce qu'il comprend un dispositif (21, P) pour appliquer et choc hydraulique brutal à contre-courant à travers la paroi de chaque élément filtrant (26) tour à tour, ce dispositif comprenant un patin (21) à l'extrémité rotative du bras (20) pour fermer un trou (16) de la cloison (15), alors que l'ouverture (51) de ladite extrémité du bras est fermée par la cloison, et une pompe aspirante (P).

2. Appareil suivant la revendication 1, caractérisé en ce que le patin (21) est constitué par une plaque (50) entourant l'ouverture (51) du bras et ayant, suivant le cercle, une logueur sensiblement supérieure à la somme du diamètre d'un trou (16) et de l'ouverture (51) de l'extrémité du bras (20).

3. Appareil suivant l'une des revendications 1 et 2, caractérisé en ce que le bras (20) est relié à un épurateur centrifuge (23) par l'intermédiaire d'un régulateur de débit (19), d'une pompe (P) et d'un indicateur de régénération (22).

4. Appareil suivant la revendication 3, caractérisé en ce que le dispositif régulateur de débit (19) comprend un carter et un manchon (54) constitué d'une membrane élastique contenant de l'air sous pression disposé dans ce carter pour en limiter élastiquement la section de passage.

5. Appareil suivant la revendication 4, caractérisé en ce que le manchon (54) délimite dans le carter une chambre annulaire gonflée avec de l'air sous pression et limitant la section de passage dans le carter, de façon élastique.

6. Appareil suivant la revendication 3, caractérisé en ce que le dispositif indicateur de régénération (22) comprend un obturateur (60) sollicité élastiquement en position de fermeture, entre la sortie du régulateur (19) et l'entrée de l'épurateur (23), l'obturateur (60) étant solidaire d'un axe portant un index (63).

7. Appareil suivant l'une des revendications 1 à 6, caractérisé en ce que chaque élément filtrant (26) comprend un support métallique tubulaire perforé (28) entouré d'une toile filtrante (29) recouverte d'une gaine (30) elle-même entourée d'un fil de métal (33) enroulé hélicoïdalement.

8. Appareil suivant la revendication 7, caractérisé en ce que le support perforé (28) comporte un réseau de perforations ayant un diamètre de 2 mm et un espacement de 4 mm.

9. Appareil suivant la revendication 8, caractérisé en ce que la gaine (30) comporte un fil de trame (32) annulaire ayant un diamètre supérieur à celui du fil de chaîne (31), dans une proportion de 1 à 2, le fil de trame ayant de préférence un diamètre de 4/10 mm et le fil de chaîne un diamètre de 2/10 mm.

10. Appareil suivant l'une des revendications 1 à 9, caractérisé en ce qu'il comprend des moyens de retenue (27) solidaires de la cloison (15), fixés sur chaque trou (16) et adaptés pour fermer automatiquement un trou lorsque l'élément filtrant correspondant (26) est retiré.

11. Appareil suivant la revendication 10, caractérisé en ce que les moyens de retenue (27) comprennent un obturateur (46) sollicité en position de fermeture pour empêcher le passage du fluide du compartiment d'entrée (14) dans le compartiment de sortie (13), et adapté pour être ouvert lorsqu'un élément filtrant (26) est monté en place.

12. Procédé de filtration et décolmatage mis en oeuvre dans un appareil de filtration de fluides en continu suivant l'une des revendications 1 à 11, dans lequel on admet sous pression le fluide à filtrer dans le compartiment contenant le bras rotatif et en correspondance de chaque position dudit bras:

a)    on isole un élément filtrant du compartiment d'entrée du fluide en le faisant coincide avec l'extrémité du bras rotatif;

b)    on fait passer le fluide à travers les éléments restants de l'intérieur vers l'extérieur;

c)    on recueille le fluide filtré dans le compoartiment qui ne contient pas le bras rotatif;

d)    on provoque — à travers le bras rotatif — une perte de charge à travers la paroi de l'èlément filtrant isolé du compartiment d'entrée du fluide;

e)    on recueille à travers ce bras, le courant résultant de fluide chargé de impuretés arrêtées par ledit élément filtrant:

ledit procédé étant caractérisé en ce que, dans une première phase, on ferme à la fois un élément filtrant et l'ouverture de l'extrémité rotative du bras et on applique, imultanément une dépression à l'intérieur dudit bras, et, dans une seconde phase, on provoque un choc hydraulique brusque à contre-courant à travers la paroi de l'élément filtrant en le mettant en communication avec l'ouverture de ladite extrémité du bras et on évacue sous pression le courant fu fluide chargé d'impuretés.

**Patentansprüche**

1. Einrichtung zur kontinuierlichen Filterung von Fluiden, mit einem Raum, welcher innen durch eine Trennwand (15), welche wenigstens eine kreisförmige Reihe von Löchern (16) aufweist, in zwei Abteile (13, 14) unterteilt ist, hohlen rohrartigen Filterelementen (26), die an einem Ende abgeschlossen und mit dem entgegengesetzten offenen Ende auf jedem der Löcher der Trennwand befestigt sind, im Austrittsabteil (13) für das gefilterte Fluid, einem rohrartigen Dreharm (18, 20), welcher im Eintrittsabteil (14) für das zu filternde Fluid angebracht ist und dessen Ende den Kreis der Löcher für ein aufeinanderfolgendes Zusammentreffen mit einem jeden derselben überstreicht, dadurch gekennzeichnet, daß sie eine Vorrichtung (21, P) zum aufeinanderfolgenden Anlegen eines heftigen hydraulischen Stoßes im Gegenstrom durch die Wand eines jeden Filterelements (26), wobei die Vorrichtung ein Gleitstück (21) am Drehende des Arms (20) zum Verschließen eines Loches (16) der Trennwand (15), während die Öffnung (51) dieses Endes des Armes durch die Trennwand verschlossen ist, aufweist, und eine Saugpumpe (P) umfaßt.

2. Einrichtung nach Anspruch 1, dadurch gekennzeichnet, daß das Gleitstück (21) durch eine Platte (50) gebildet ist, welche die Öffnung (51) des Arms umgibt und längs des Kreises eine Länge hat, welche wesentlich größer als die Summe der Durchmesser eines Loches (16) und der Öffnung (51) des Endes des Armes (20) ist.

3. Einrichtung nach einem der Ansprüche 1 und 2, dadurch gekennzeichnet, daß der Arm (20) über einen Durchflußregler (19), eine Pumpe (P) und einen Regenerationsanzeiger (22) mit einer Reinigungszentrifuge (23) verbunden ist.

4. Einrichtung nach Anspruch 3, dadurch gekennzeichnet, daß die Durchflußreglervorrichtung (19) ein Gehäuse und eine durch eine elastische Membran gebildete Manschette (54), welche unter Druck stehende Luft enthält und im Gehäuse angeordnet ist, um dessen Durchtrittsquerschnitt elastisch zu begrenzen, umfaßt.

5. Einrichtung nach Anspruch 4, dadurch gekennzeichnet, daß die Manschette (54) in dem Gehäuse ein Ringkammer bestimmt, welche mit Druckluft aufgeblasen ist und in elastischer Weise den Durchtrittsquerschnitt des Gehäuses begrenzt.

6. Vorrichtung nach Anspruch 3, dadurch gekennzeichnet, daß die Regenerationsanzeigervorrichtung (22) einen elastisch in Schließstellung belasteten Verschluß (60) zwischen dem Ausgang des Reglers (19) und dem Eingang des Reinigers (23) umfaßt, wobei der Verschluß (60) mit einer einen Zeiger (63) tragenden Achse fest verbunden ist.

7. Einrichtung nach einem der Ansprüche 1 bis 6, dadurch gekennzeichnet, daß jedes Filterelement (26) einen perforierten rohrförmigen metallischen Träger (28) umfaßt, welcher von einem Filtergewebe (29) umgeben ist, das mit einer Umhüllung (30) bezogen ist, die ihrerseits von einem spiralförmig gewickelten Draht (33) umgeben ist.

8. Einrichtung nach Anspruch 7, dadurch gekennzeichnet, daß der perforierte Träger (28) ein Netz von Perforationen mit einem Durchmesser von 2 mm und einem Abstand von 4 mm umfaßt.

9. Vorrichtung nach Anspruch 8, dadurch gekennzeichnet, daß die Umhüllung (30) einen ringförmigen Schußfaden (32) mit einem Durchmesser, welcher im Verhältnis 1 zu 2 größer als derjenige des Kettfadens (31) ist, umfaßt, wobei der Schußfaden vorzugsweise einen Durchmesser von 4/10 mm und der Kettfaden einen Durchmesser von 2/10 mm hat.

10. Einrichtung nach einem der Ansprüche 1 bis 9, dadurch gekennzeichnet, daß sie mit der Trennwand (15) fest verbundenen Staumittel (27) umfaßt, welche auf einem jeden Loch (16) befestigt und so eingerichtet sind, daß sie automatisch ein Loch verschließen, wenn das zugehörige Filterelement (26) abgenommen wird.

11. Einrichtung nach Anspruch 10, dadurch gekennzeichnet, daß die Staumittel (27) einen Verschluß (46) umfassen, welcher zur Verhinderung eines Durchtritts von Fluid aus dem Eintrittsabteil (14) in das Austrittsabteil (13) in Schließstellung belastet und so eingerichtet ist, daß er geöffnet wird, wenn ein Filterelement (26) in Stellung gebracht wird.

12. Auf einer Einrichtung zu kontinuierlichen Filterung von Fluiden nach einem der Ansprüche 1 bis 11 durchgeführtes Verfahren zur Filterung und Filterreinigung, bei welchem das zu filternde Fluid unter Druck in das den Dreharm enthaltende Abteil eingelassen wird und in Entsprechung zu jeder Stellung des Armes:

a) ein Filterelement des Eintrittsabteils für das Fluid isoliert wird, indem dieses mit dem Ende des Dreharms in Zusammenfall gebracht wird;
b) das Fluid durch die verbleibenden Elemente von innen nach außen geleitet wird;

c) das gefilterte Fluid in dem den Dreharm nicht enthaltenden Abteil aufgefangen wird;
d) — durch den Dreharm hindurch — ein Druckverlust durch die Wand des isolierten Filterelements des Eintrittsabteils für die Flüssigkeit hindurch bewirkt wird; und
e) der sich ergebende Strom des mit durch dieses Filterelement aufgefangenen Verunreinigungen beladenen Fluids durch den Arm hindurch aufgefangen wird,

dadurch gekennzeichnet, daß in einer ersten Phase gleichzeitig ein Filterelement und die Öffnung des Drehendes des Armes geschlossen werden und gleichzeitig ein Unterdruck im Inneren des Armes angelegt wird, und daß in einer zweiten Phase ein plötzlicher hydraulischer Stoß im Gegenstrom durch die Wand des Filterements hindurch bewirkt wird, indem dieses mit der Öffnung dieses Endes des Armes in Verbindung gesetzt wird, und der Strom des mit Verunreinigungen beladenen Fluids unter Druck abgeführt wird.

## Claims

1. Apparatus for continuously filtering fluids, comprising an enclosure divided internally into two compartments (13, 14) by a partition wall (15) including at least one circular row of apertures (16), filtering elements (26) of hollow tubular shape, closed at one end and fixed by their opposite open end on each of said apertures of the partition wall, in the filtered fluid outlet compartment (13), a rotary tubular arm (18, 20) mounted in the inlet compartment (14) for the fluid to be filtered, the end of said arm sweeping along the circle of apertures so as to coincide with each of them in turn, characterized in that it comprises a device (21, P) for applying a sudden countercurrent hydraulic shock across the wall of each filtering element (26) in turn, said device comprising a shoe (21) at the rotary end of the arm (20) for closing an aperture (16) of the partition wall (15), when the opening (51) of said end of the arm is closed by the partition wall, and a suction pump (P).

2. Apparatus according to claim 1, characterized in that the shoe (21) comprises a plate (50) surrounding the opening (51) of the arm and having, along the circle, a length substantially greater than the sum of the diameters of one of said apertures (16) and of the opening (51) at the end of the arm (20).

3. Apparatus according to any one of the claims 1 and 2, characterized in that the arm (20) is connected to a centrifugal purifier (23) through a flow regulator (19), a pump (P) an a regeneration indicator (22).

4. Apparatus according to claim 3, characterized in that the flow regulator device (19) comprises a case and a sleeve (54) constituted by an elastically yieldable diaphragm containing air under pressure located in said case for elastically limiting the section of the passage therethrough.

5. Apparatus according to claim 4, characterized in that the sleeve (54) defines in the case an annular chamber which is inflated with air under pressure and limits the section of the passage through the case in an elastic manner.

6. Apparatus according to claim 3, characterized in that the regeneration indicator device (22) comprises a valve member (60) which is elastically beased to a closing position, between the outlet of the regulator (19) and the inlet of the purifier (22), said valve member being rigid with a shaft carrying a pointer (63).

7. Apparatus according to any one of the claims 1 to 6, characterized in that each filtering element (26) comprises a perforated tubular metal support (28) surrounded by a filter cloth (24) which is covered with a sheath (30) which is itself surrounded by a helically wound metal wire (33).

8. Apparatus according to claim 7, characterized in that the perforated support (28) comprises a network of perforations having a diameter of 2 mm and a spacing apart of 4 mm.

9. Apparatus according to claim 8, characterized in that the sheath (30) comprises an annular weft thread (32) having a diameter greater that the diameter of the warp thread (31) in a proportion of 1 : 2, the weft thread having preferably a diameter of 4/10 mm and the warp thread a diameter of 2/10 mm.

10. Apparatus according to any one of the claims 1 to 9, characterized in that it comprises check valve means (27) rigid with the partition wall (15) fixed to each aperture (16) and adapted to automatically close the corresponding aperture when the corresponding filtering element (26) is withdrawn.

11. Apparatus according to claim 10, characterized in that the check valve means (27) comprise a valve member (46) biased to the closing position thereof for preventing the passage of fluid from the inlet compartment (14) to the outlet compartment (13), and adapted to be opened when a filtering element (26) is placed in position.

12. Filtering and clearing process in an apparatus for continuously filtering fluids, according to any one of claims 1 to 11, in which the fluid to be filtered is admitted under pressure into the compartment containing the rotary arm and in registration with each position of the arm:

a) isolating a filtering element from the fluid inlet compartment by registering said element with the end of the rotary arm;

b) passing the fluid through the remaining filtering elements from the interior toward the exterior;

c) receiving the filtered fluid in the compartment which does not contain the rotary arm;

d) producing — through the rotary arm — a pressure drop across the wall of the filtering element which is isolated from the inlet compartment; and

e) receiving through the arm the resulting current of fluid charged with impurities arrested by said filtering element:

said process being characterized in that, in a first stage, both a filtering element and the opening of the rotary end of the arm are closed and a depression inside said arm is simultaneously applied and, in a second stage, a sudden countercurrent hydraulic shock is produced through the wall of the filtering element by putting it in communication with the opening of said end of the arm, and the flow of fluid charged with impurities is discharged under pressure.

FIG_3

FIG_1

FIG_4

FIG.5

-26-

34

45

40

27

42

43

44

48

49

46

47

15

16

52

21

FIG.2

50

51

20

13

# FIG.7

# FIG.6